# EUROPÄISCHE PATENTSCHRIFT

(11) **EP 0 637 682 B1**
(45) Veröffentlichungstag und Bekanntmachung des Hinweises auf die Patenterteilung: **19.02.1997**
(21) Anmeldenummer: 94110531.4
(22) Anmeldetag: 06.07.1994
(51) Int. Cl.: F02B 75/22, F02M 39/00

(54) **Wassergekühlte mehrzylindrige Brennkraftmaschine mit V-förmig angeordneten Zylinderreihen**
Water-cooled multicylinder internal combustion engine with V-configuration arranged cylinders
Moteur à combustion interne multicylindre refroidi par eau avec des cylindres disposés en V

(30) Priorität: 04.08.1993 DE 4326159
(43) Veröffentlichungstag der Anmeldung: 08.02.1995
(73) Patentinhaber: MERCEDES-BENZ AG, 70327 Stuttgart (DE)
(72) Erfinder: Werner, Johannes, Dipl.-Ing., D-71334 Waiblingen (DE); Thiele, Klaus-Jürgen, D-72622 Nürtingen (DE); Bäuerle, Emil, Dipl.-Ing., D-73732 Esslingen (DE); Kerschbaum, Walter, Dipl.-Ing., D-70736 Fellbach (DE); Bauknecht, Peter, Dipl.-Ing., D-71711 Steinheim (DE)

(56) Entgegenhaltungen:
- EP-A- 0 543 301
- DE-A- 3 910 794
- DE-A- 3 935 883
- DE-A- 4 030 947
- FR-A- 2 007 102
- GB-A- 2 070 685

## Beschreibung

Die Erfindung betrifft eine wassergekühlte mehrzylindrige Brennkraftmaschine mit V-förmig angeordneten Zylinderreihen, mit durch eine Nockenwelle über Stößelstangen und Kipphebel angetriebenen Gaswechselventilen und mit aus nockenbetätigter Pumpe und Düse bestehenden Einspritzvorrichtungen nach den im Oberbegriff des Patentanspruchs 1 angegebenen Merkmalen.

Aus der DE-A-28 23 357 ist eine Brennkraftmaschine mit V-förmig angeordneten Zylinderreihen bekannt, bei der jede Zylinderreihe eine Nockenwelle für die Betätigung der Gaswechselventile über Stößelstangen und Kipphebel aufweist. Die jedem Zylinder zugeordnete Einspritzvorrichtung besteht aus einer baueinheitlich zusammengefaßten Pumpe und Düse (Pumpe-Düse), die in einer im Zylinderkopf vorgesehenen Aufnahmebohrung steckt. Die Pumpe-Düsen der einen Zylinderreihe und die Pumpe-Düsen der anderen Zylinderreihe werden von den jeweiligen Nockenwellen angetrieben.

Ferner ist ein als Wasserführung dienender Längskanal vorgesehen, der sich über sämtliche Zylinder jeder Zylinderreihe in Höhe der Zylinderkopfhauben außenliegend erstreckt.

Aus der FR-A-2007102 ist eine V-förmige Brennkraftmaschine mit durch eine Nockenwelle über Stößelstangen und Kipphebel angetriebenen Gaswechselventilen bekannt, bei der im V-Raum dieser Brennkraftmaschine eine Pumpe als konventionelle Reiheneinspritzpumpe für alle Düsen auf einem Befestigungssattel gelagert ist. Die wassergekühlte Brennkraftmaschine ist mit einer angegossenen Kühlwassersammelleitung versehen, die als Versteifung der Seitenwände des Kurbelgehäuses und der Geräuschminderung dienen.

Ferner ist aus der DE-A-39 35 883, die den nächstkommenden Stand der Technik bildet, eine mehrzylindrige Brennkraftmaschine mit V-förmig angeordneten Zylinderreihen mit im V-Raum für die Pumpen vorgesehenen Aufnahmebohrungen und einer Nockenwelle als gemeinsame Antriebswelle für die Gaswechselventile und Pumpen beider Zylinderreihen bekannt. Bei dieser Brennkraftmaschine sind in einer durch den jeweiligen Zylinder verlaufenden Querschnittsebene des Zylindergehäuses vom V-Raum der Zylinderreihen ausgehend nacheinander die aus Pumpenaufnahmebohrung, Ventilstößel und Zylinder bestehenden Bereiche fächerförmig aneinandergereiht.
Des weiteren können bei Brennkraftmaschinen mit hochgezogenem Motorgehäuse, z.B. solche mit Flüssigkeitskühlung, die Einzeleinspritzpumpen als unmittelbar im Motorgehäuse angeordnete Steckpumpen ausgebildet sein.

Der Erfindung liegt die Aufgabe zugrunde, an einer wassergekühlten mehrzylindrigen Brennkraftmaschine mit V-förmig angeordneten Zylinderreihen und mit an den Längsseiten der Zylinderreihen angeformten Einspritzpumpen Maßnahmen vorzusehen, die trotz Beibehaltung einer in der Bauausführung kompakten Brennkraftmaschine dennoch eine ausreichende Kühlung auch der Einspritzpumpen ermöglichen.

Zur Lösung der Aufgabe dienen erfindungsgemäß die im Kennzeichen des Patentanspruchs 1 angegebenen Merkmale.

Durch die besonderen Wasserführungen einerseits zwischen den jeweiligen Ventilstößelführungen und Pumpen-Aufnahmebohrungen sowie andererseits zwischen den einander gegenüberliegenden Pumpen-Aufnahmebohrungen sind die einzelnen Pumpen geringeren Temperaturen ausgesetzt und somit störunanfälliger. Eine gedrängte und gewichtsminimierende Bauweise der Brennkraftmaschine kann beibehalten werden. Außerdem sind im Fall einer Funktionsbeeinträchtigung oder Störung des Pumpensystems die Pumpen weiterhin leicht zugänglich und schnell demontierbar.

In den Unteransprüchen sind noch förderliche Weiterbildungen der Erfindung angegeben.

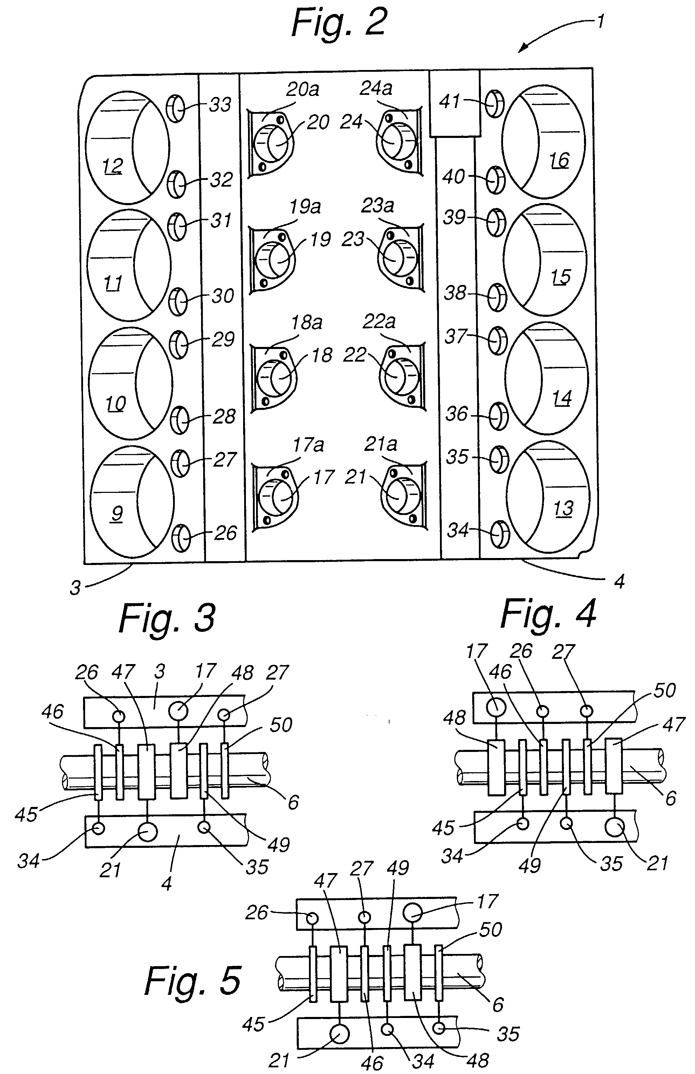

Die Aufnahmebohrungen sind an den innenliegenden Längsseiten der Zylinderreihen so plaziert, daß die Pumpenauflage ohne Nischenbildung ist und somit eine einfache Bearbeitung der Pumpenauflage der in Reihe angeordneten Aufnahmebohrungen durch Durchfräsen in Längsrichtung möglich ist (Fig. 5).

Durch die besondere Anordnung der Nocken für die Pumpen und Gaswechselventile beider Zylinderreihen (Anspruch 6) sind kurze Einspritzleitungen realisierbar, während bei der Ausführung (Anspruch 7) mit den außenliegenden Pumpennocken geringere Biegemomente auftreten, da die Belastung auf die mittleren Nocken, die als Antrieb für die Gaswechselventile dienen, kleiner ist.

Die Erfindung wird in der Zeichnung dargestellt und anhand von Ausführungsbeispielen im folgenden näher erläutert. Es zeigen:
- Fig. 1: eine erfindungsgemäße Brennkraftmaschine mit Wasserführungen im Querschnitt,
- Fig. 2: das Zylindergehäuse dieser Brennkraftmaschine in Draufsicht,
- Fig. 3: die Anordnung der Nocken der gemeinsamen Nokkenwelle in schematischer Darstellung und
- Fig. 4: eine andere Nockenanordnung.

Eine mehrzylindrige Brennkraftmaschine 1 mit einem Zylindergehäuse 1 mit V-förmig angeordneten Zylinderreihen 3,4 ist tief im V-Raum mit einer Nockenwellenaufnahme 5 für die Lagerung einer Nockenwelle 6 versehen, welche als gemeinsame Antriebswelle für alle Gaswechselventile 7 und Pumpen 8 beider Zylinderreihen 3,4 bestimmt ist.

An den innenliegenden Längsseiten beider Zylinderreihen 3,4 sind den Zylindern 9,10,11,12 sowie den Zylindern 13,14,15,16 zugeordnete Aufnahmebohrungen 17,18,19,20 und 21,22,23,24 für die Pumpen 8 angeformt, die V-förmige Reihen bilden und der V-Form der Zylinderreihen 3,4 angepaßt sind. Der Winkel zwischen den jeweils einander gegenüberliegenden und in die Nockenwellenaufnahme 5 mündenden Aufnahmebohrungen 17 bis 24 beträgt etwa 55°.

Zwischen den Zylindern und Aufnahmebohrungen verlaufen Stößelstangen 25 in Ventilstößelführungen, die bei der einen Zylinderreihe mit 26 bis 33 und bei der anderen Zylinderreihe mit 34 bis 41 bezeichnet sind. Der Winkel zwischen den jeweils einander gegenüberliegenden Ventilstößelführungen ist größer als der von den Aufnahmebohrungen gebildete Winkel und größer als der von den Zylindern gebildete Winkel , wobei dieser größer ist als der von den Aufnahmebohrungen gebildete Winkel.

Der Winkel zwischen den Ventilstößelführungen beträgt etwa 110° und der Winkel zwischen den Zylindern beträgt etwa 90°.

Somit sind in einer durch den jeweiligen Zylinder verlaufenden Querschnittsebene des Zylindergehäuses 1, und zwar vom V-Raum der Zylinderreihen 3,4 ausgehend, folgende Bereiche in der Reihenfolge fächerförmig angeordnet:
Wasservorlauf, Pumpen-Aufnahmebohrung, Kühlmittellängskanal, Ventilstößelführung und Zylinder.

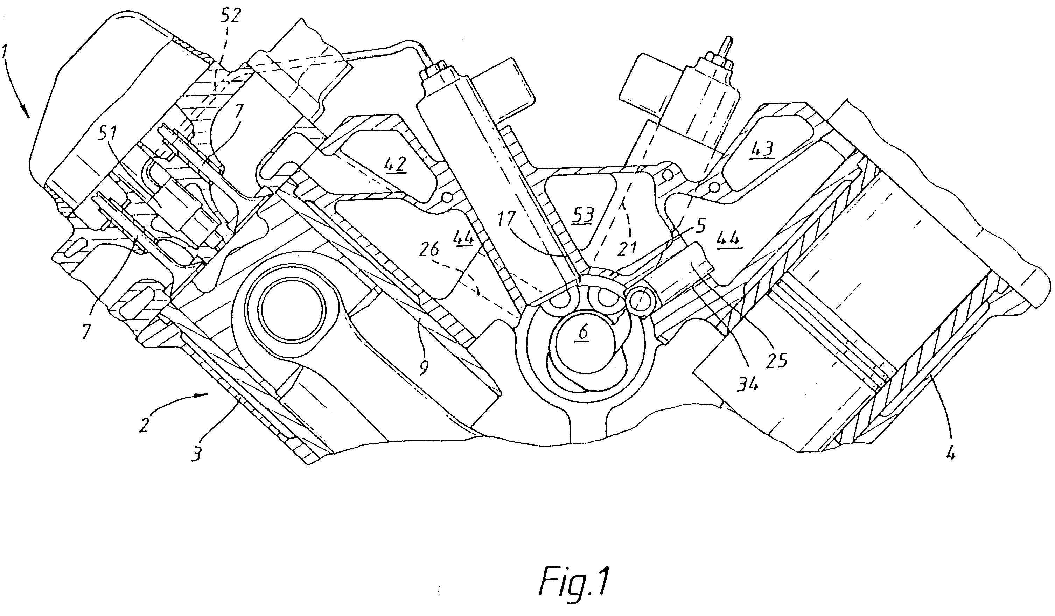

Unter dem Kühlmittellängskanal 42,43 befindet sich zwischen Zylinder und Aufnahmebohrung ein Stößelraum 44 und zwischen beiden Aufnahmebohrungen 17,21 eine weitere Wasserfürung,die als Wasservorlauf 53 zum jeweiligen Zylinder führt (Fig.1).

Die Pumpenauflagen 17a bis 24a sind nischenfrei ausgeführt, d.h. die Längsseiten der Zylinderreihen 3,4 sind weder ausgespart noch mit Einbuchtungen versehen. Somit ist eine kostengünstige Bearbeitung der in Reihe liegenden Pumpenauflagen durch Durchfräsen in Längsrichtung möglich.

In Fig. 3 ist die Zuordnung der auf der gemeinsamen Nockenwelle 6 angeordneten Nocken 45 bis 50 zu den Gaswechselventilen 7 und Pumpen 8 zweier gegenüberliegender Zylinder 9,13 von der einen und der anderen Zylinderreihe 3,4 gezeigt. Im einzelnen ist der außenliegende Nocken 45 der Stößelführung 34 der Zylinderreihe 4 zugeordnet, der Nocken 46 der Stößelführung 26 der Zylinderreihe 3, der breitere Nocken 47 der Aufnahmebohrung 21 der Zylinderreihe 4 und der gleich breite Nocken 48 der Aufnahmebohrung 17 der Zylinderreihe 3, ferner der Nocken 49 der Stößelführung 35 der Zylinderreihe 4 sowie der Nocken 50 der Stößelführung 27 der Zylinderreihe 3. Diese Ausführung ergibt die kürzeste Leitungslänge der von der Pumpe 8 zu der entsprechenden Düse 51 führenden Einspritzleitung 52.

Ein anderes Ausführungsbeispiel ist in Fig.4 gezeigt. Hier sind die den Aufnahmebohrungen 17,21 der Pumpen zugeordneten breiten Nocken 48,47 außenliegend. Von den innenliegenden Nocken 45,46 und 49,50 für die Betätigung der Gaswechselventile 7 ist der Nocken 45 der Stößelführung 34 der Zylinderreihe 4, der Nocken 46 der Stößelführung 26 der Zylinderreihe 3 und der Nocken 49 der Stößelführung 35 der Zylinderreihe 4 sowie der Nocken 50 der Stößelführung 27 der Zylinderreihe 3 zugeordnet. Die Einspritzleitung erfordert hier eine etwas größere Einspritzleitungslänge. Der Vorteil bei dieser Ausführung liegt darin, daß durch die außenliegenden Pumpennocken geringere Biegemomente und damit eine Entlastung der Welle auftritt.

Bei der Ausführung gemäß Fig. 5 liegen die den Aufnahmebohrungen 21, 17 der Pumpen 8 zugeordneten Nocken 47, 48 der einander gegenüberliegenden Zylinderreihen 4, 3 zwischen den Nocken 45, 46 und 49, 50, die die Gaswechselventile 7 betätigen. Dabei sind die Nocken 45, 46 den Stößelführungen 34, 26 der Zylinderreihe 3, 4 und die Nocken 49, 50 den Stößelführungen 35, 27 der Zylinderreihe 4, 3 zugeordnet.

## Patentansprüche

1. Wassergekühlte mehrzylindrige Brennkraftmaschine mit V-förmig angeordneten Zylinderreihen mit durch eine Nockenwelle über Stößelstangen und Kipphebel angetriebenen Gaswechselventilen, mit aus nockenbetätigter Pumpe und Düse bestehenden Einspritzvorrichtungen mit für die Pumpen jeder Zylinderreihe vorgesehenen Aufnahmebohrungen, die V-förmig angeordnete Reihen bilden und der V-Form der Zylinderreihen angepaßt sind, wobei die Aufnahmebohrungen (17-24) an den den V-Raum begrenzenden Längsseiten der Zylinderreihen (3,4) angeformt sind und das tief in dem V-Raum im Zylindergehäuse (2) eine Nockenwelle(6) als gemeinsame Antriebswelle für die Gaswechselventile (7) und Pumpen (8) beider Zylinderreihen (3,4) integriert ist und daß in einer durch den jeweiligen Zylinder (9-16) verlaufenden Querschnittsebene des Zylindergehäuses (1) vom V-Raum der Zylinderreihen(3,4) ausgehend nacheinander die aus Pumpen-Aufnahmebohrung, Ventilstößelführungen (26-41) und Zylinder (13-16) bestehenden Bereiche fächerförmig aneinandergereiht sind,
**dadurch gekennzeichnet**,
daß jede Zylinderreihe jeweils einen zwischen der Ventilstößelführung und der Pumpen-Aufnahmebohrung liegenden und als Wasserführung dienenden Längskanal (42,43) aufweist, und daß zwisc hen den gegenüberliegenden Pumpen-Aufnahmebohrungen eine weitere Wasserführung (53) vorhanden ist.

2. Brennkraftmaschine nach Anspruch 1,
**dadurch gekennzeichnet**,
daß der jeweils von den einander gegenüberliegenden Aufnahmebohrungen (17-24) beider Zylinderreihen (3,4) gebildete Winkel kleiner ist als derjenige zwischen den einander gegenüberliegenden Ventilstößelführungen (26-41).

3. Brennkraftmaschine nach Anspruch 2,
**dadurch gekennzeichnet**,
daß der Winkel zwischen den jeweils gegenüberliegenden Aufnahmebohrungen (17-24) höchstens 70° beträgt.

4. Brennkraftmaschine nach einem der vorhergehenden Ansprüche,
**dadurch gekennzeichnet**,
daß jede an den innenliegenden Längsseiten beider Zylinderreihen (3,4) angeformte Aufnahmebohrung (17-24) eine für die Bearbeitung nischenfreie Pumpenauflage (17a;24a) aufweist.

5. Brennkraftmaschine nach einem der vorhergehenden Ansprüche,
**dadurch gekennzeichnet**,
daß die den Pumpen (8) zugeordneten Nocken (47-48) von jeweils einander gegenüberliegenden Zylindern beider Zylinderreihen (3,4) zwischen den Nocken (45,46; 49,50) für die Gaswechselventile (7) liegen, wobei ausgehend von einem außenliegenden Nocken (45) die nachfolgenden Nocken (46-50) wechselweise der einen und anderen Zylinderreihe zugeordnet sind.

6. Brennkraftmaschine nach einem der vorhergehenden Ansprüche 1 bis 4,
**dadurch gekennzeichnet**,
daß die den Gaswechselventilen (7) zugeordneten Nocken (45, 46; 49, 50) von jeweils einander gegenüberliegenden Zylindern beider Zylinderreihen (3,4) zwischen den Nocken (48, 47) für die Pumpen (8) liegen, wobei ausgehend von einem außenliegenden Pumpennocken (47) die nachfolgenden Nocken wechselweise der einen Zylinderreihe (3) und anderen Zylinderreihe (4) zugeordnet sind.

7. Brennkraftmaschine nach einem der vorhergehenden Ansprüche 1 bis 4,
**dadurch gekennzeichnet**,
daß die in den Pumpen (8) zugeordneten Nocken (47, 48) von jeweils einander gegenüberliegenden Zylindern zwischen den Nocken (45, 46; 49, 50) für die Pumpen (8) liegen, wobei ausgehend von einem außenliegenden Nocken (45) die nachfolgenden Nocken (47 bis 50) wechselweise der einen Zylinderreihe (3) und der anderen Zylinderreihe (4) zugeordnet sind.

## Claims

1. Water-cooled multicylinder internal-combustion engine with banks of cylinders arranged in a V-shape and having gas exchange valves operated by a camshaft via tappet rods and rocker arms, and with injection devices consisting of a cam-activated pump and nozzle, with mounting holes for the pumps associated with each cylinder bank forming V-shaped rows adapted to the V-shape of the cylinder banks, such that the mounting holes (17-24) are formed in the longitudinal sides of the cylinder banks (3, 4) that delimit the V-space and a camshaft (6) is integrated deep within the V-space in the cylinder block (2) to act as the joint drive-shaft for the gas exchange valves (7) and pumps (8) of the two cylinder banks (3, 4), and such that along a cross-sectional plane of the cylinder block (1) passing through each of the cylinders (9-16) and starting from the V-space of the cylinder banks (3, 4), the areas comprising the pump mounting holes, the valve tappet rod guides (26-41) and the cylinders (13-16) are aligned one after the other in a fan shape,
**characterized in that**
each cylinder bank has a respective longitudinal channel (42, 43) formed between the valve tappet rod guide and the pump mounting hole and serving as a water duct, and between the pump mounting holes opposite one another there is a further water duct (53).

2. Internal-combustion engine according to Claim 1,
**characterized in that**
the angle formed between respectively opposite mounting holes (17-24) in the two cylinder banks (3, 4) is smaller than the angle between respectively opposite valve tappet rod guides (26-41).

3. Internal-combustion engine according to Claim 2,
**characterized in that**
the angle between respectively opposite mounting holes (17-24) is at most 70°.

4. Internal-combustion engine according to any of the preceding Claims,
**characterized in that**
each mounting hole (17-24) formed in the inward-facing longitudinal sides of the two cylinder banks (3, 4) comprises a recess-free pump support surface (17a-24a) for machining.

5. Internal-combustion engine according to any of the preceding Claims,
**characterized in that**
the cams (47, 48) associated with the pumps (8) of respectively opposite cylinders of the two cylinder banks (3, 4) are positioned between the cams (45, 46; 49, 50) for the gas exchange valves (7), such that beginning with an outermost cam (45) the subsequent cams (46-50) are associated in alternation with one cylinder bank and then the other.

6. Internal-combustion engine according to any of the preceding Claims 1 to 4,
**characterized in that**
the cams (45, 46; 49, 50) associated with the gas exchange valves (7) of respectively opposite cylinders of the two cylinder banks (3, 4) are positioned between the cams (48, 47) for the pumps (8), such that beginning with an outermost pump cam (47) the subsequent cams are associated in alternation with one cylinder bank (3) and then the other cylinder bank (4).

7. Internal-combustion engine according to any of the preceding Claims 1 to 4,
**characterized in that**
the cams (47, 48) associated with the pumps (8) of respectively opposite cylinders are positioned between the cams (45, 46; 49, 50) for the pumps (8), such that beginning with an outermost cam (45) the subsequent cams (47 to 50) are associated in alternation with one cylinder bank (3) and then the other cylinder bank (4).

## Revendications

1. Moteur à combustion interne multicylindrique refroidi par eau, comprenant des rangées de cylindres disposées en V munies de soupapes de distribution entraînées par un arbre à cames par l'intermédiaire de poussoirs et de culbuteurs, le moteur comprenant des dispositifs d'injection composés d'une pompe actionnée par came et d'un injecteur et possédant des perçages de logement pour les pompes de chaque rangée de cylindres, perçages qui forment des rangées disposées en V et sont adaptés à la forme de V des rangées de cylindres, les perçages de logement (17-24) étant formés le long des côtés longitudinaux des rangées de cylindres (3, 4) qui délimitent le creux du V, où un arbre à cames (6) est intégré en tant qu'arbre d'entraînement commun pour les soupapes de distribution (7) et pour les pompes (8) des deux rangées de cylindres (3, 4) dans le fond du creux du V du bloc cylindres (2), et où, dans un plan de section transversale du bloc cylindres (2) qui passe par un cylindre (9-16) considéré, on trouve, en partant du creux du V des rangées de cylindres (3,4) l'une à la suite de l'autre, en juxtaposition en éventail, les régions composées chacune d'un perçage de logement de pompe, de guides (26-41) de poussoirs de soupapes et d'un cylindre (13-16),
caractérisé
en ce que chaque rangée de cylindres présente un canal longitudinal (42, 43) situé entre le guide de poussoir de soupape et le perçage de logement de pompe, et qui sert de passage d'eau, et en ce qu'un autre passage d'eau (53) est prévu entre les perçages de logement de pompes mutuellement opposés.

2. Moteur à combustion interne selon la revendication 1,
caractérisé
en ce que l'angle formé par les perçages de logement (17-24) mutuellement opposés des deux rangées de cylindres (3, 4) est plus petit que celui formé entre les guides (26-41) de poussoirs de soupapes mutuellement opposés.

3. Moteur à combustion interne selon la revendication 2,
caractérisé
en ce que l'angle formé entre les perçages de logement (1724) mutuellement opposés vaut au maximum 70°.

4. Moteur à combustion interne selon l'une des revendications précédentes,
caractérisé
en ce que chacun des perçages de logement (17-24) formés le long des côtés longitudinaux des deux rangées de cylindres (3, 4) présente un appui de pompe (17a ; 24a) dépourvu de niches pour l'usinage.

5. Moteur à combustion interne selon l'une des revendications précédentes,
caractérisé
en ce que les cames (47-48) correspondant aux pompes (8) de deux cylindres mutuellement opposés dans les deux rangées de cylindres (3, 4) se trouvent entre les cames (45, 46 ; 49, 50) des soupapes de distribution (7) et, en partant d'une came extérieure (45), les cames (46-50) qui suivent sont associées alternativement à l'une et à l'autre des rangées de cylindres.

6. Moteur à combustion interne selon l'une des revendications 1 à 4,
caractérisé
en ce que les cames (45, 46 ; 49, 50) des soupapes de distribution (7) qui appartiennent à des cylindres mutuellement opposés dans les deux rangées de cylindres (3, 4) se trouvent entre les cames (48, 47) correspondant aux pompes (8) et, en partant d'une came de pompe extérieure (47), les cames qui suivent sont associées alternativement à une rangée de cylindres (3) et à l'autre rangée de cylindres (4).

7. Moteur à combustion interne selon l'une des revendications 1 à 4,
caractérisé
en ce que les cames (47, 48) correspondant aux pompes (8) et appartenant chacune à l'un de deux cylindres mutuellement opposés se trouvent entre les cames (45, 46 ; 49, 50) correspondant aux soupapes de distribution (7) et, en partant d'une came extérieure (45), les cames (47 à 50) qui suivent sont associées alternativement à une rangée de cylindres (3) et à l'autre rangée de cylindres (4).
